# EUROPÄISCHE PATENTSCHRIFT

(11) **EP 0 958 972 B1**
(45) Veröffentlichungstag und Bekanntmachung des Hinweises auf die Patenterteilung: **07.01.2004**
(21) Anmeldenummer: 99108691.9
(22) Anmeldetag: 18.05.1999
(51) Int. Cl.: B60R 21/20, B60R 21/22

(54) **Kopfstütze mit Gassackmodul**
Headrest with airbag module
Appui-tête comportant un module de coussin gonflable

(30) Priorität: 18.05.1998 DE 29808982 U
(43) Veröffentlichungstag der Anmeldung: 24.11.1999
(73) Patentinhaber: TRW Occupant Restraint Systems GmbH & Co. KG, 73551 Alfdorf (DE)
(72) Erfinder: Wüstholz, Bernd, 74223 Flein (DE)
(74) Vertreter: Sties, Jochen, Dipl.-Ing.

(56) Entgegenhaltungen:
- DE-A- 3 741 637
- DE-A- 3 900 495
- DE-A- 4 137 719
- DE-A- 4 334 896
- FR-A- 1 576 978
- US-A- 5 601 332
- PATENT ABSTRACTS OF JAPAN vol. 017, no. 349 (C-1078), 2. Juli 1993 (1993-07-02) & JP 05 049523 A (NISSAN MOTOR CO LTD), 2. März 1993 (1993-03-02)
- PATENT ABSTRACTS OF JAPAN vol. 097, no. 009, 30. September 1997 (1997-09-30) & JP 09 132102 A (IKEDA BUSSAN CO LTD;NISSAN MOTOR CO LTD), 20. Mai 1997 (1997-05-20)

## Beschreibung

Die vorliegende Erfindung betrifft eine Kopfstütze zur Anbringung an der Rückenlehne eines Fahrzeugsitzes gemäß dem Oberbegriff des Anspruchs 4. Außerdem betrifft die vorliegende Erfindung ein Gassackmodul gemäß dem Oberbegriff des Anspruchs 1 zur Verwendung in der Kopfstütze.

Eine Kopfstütze soll allgemein unter anderem im Falle eines Heckaufpralls verhindern, daß der Kopf eines Fahrzeuginsassen relativ zum Fahrzeug nach hinten geschleudert wird. Üblicherweise hat die Kopfstütze eine Polsterung oder ein Kopfstützpolster, das die Aufprallfläche der Kopfstütze im Rückhaltefall bereitstellt. Das Kopfstützpolster erstreckt sich zumindest an der Vorderseite der Kopfstütze.

In der DE 297 10 511 ist ein Fahrzeugsitz mit einer Rückenlehne und einer verstellbaren Kopfstütze beschrieben, die eine Abstützfläche aufweist, welche der Kopf des auf dem Fahrzeugsitz sitzenden Fahrzeuginsassen im Rückhaltefall berührt. Die bekannte Kopfstütze umfaßt im wesentlichen im Inneren einen Korpus aus formstabilem Material, an dessen Rückseite ein Lagerbügel mit Lagerstangen zur Halterung an der Rückenlehne des Sitzes befestigt ist. An der Vorderseite des innenseitigen Korpus wird ein vormontiertes Gassackmodul, bestehend aus Gassack und Gasgenerator, mit einer Schrauben- und Klippverbindung am Korpus befestigt. Ein als Formteil ausgebildetes Polsterteil und ein hinteres Polsterteil werden an den Korpus bzw. an das Gassackmodul angelegt. Die Komponenten der Kopfstütze werden mit einem Bezug zusammengehalten. Die Montage und Demontage der bekannten Kopfstütze ist aufwendig, da eine relativ große Anzahl von Einzelelementen, wie vorderes Polster, hinteres Polster, Bezug, Gassack-Einheit und Korpus mit Halterung mit entsprechenden Befestigungsmitteln zusammengebaut werden müssen, um die Kopfstütze zu bilden.

In der gattungsgemässen JP 05049523 A ist eine Kopfstütze gezeigt, bei der ein Gassackmodul unter einem die Kopfstütze komplett überziehenden Kopfstützenpolster vorgesehen ist. Bei einer Aktivierung des Gassackmoduls wird die Polsterung beschädigt.

Eine Schutzeinrichtung für Insassen auf den Vorder- oder Rücksitzbänken eines Fahrzeugs schlägt die FR 1 576 978 vor. Hierzu ist ein Gassackmodul, das sich über die gesamte Länge einer vorderen Sitzbank erstreckt, an der Rückseite oder an der Oberseite der Sitzbank angebracht.

Ein Thorax-Gassackmodul, das in einer seitlichen Aufnahme einer Rückenlehne eines Fahrzeugsitzes aufgenommen ist, zeigt die JP 09132102.

Aufgabe der vorliegenden Erfindung ist es, eine einfach zu montierende Kopfstütze und ein einfach zu montierendes Gassackmodul anzugeben.

Diese Aufgabe wird durch die Kopfstütze gemäß Anspruch 4 bzw. durch das Gassackmodul gemäß Anspruch 1 gelöst.

Demnach umfaßt die erfindungsgemäße Kopfstütze zur Anbringung an der Rückenlehne eines Fahrzeugsitzes ein Kopfstützpolster mit einer Aufprallfläche für den Insassen, einen Grundkörper, der eine von außen zugängliche, d.h. nach außen hin offene Aufnahme und eine Halterung hat, mit der die Kopfstütze an der Rückenlehne befestigt ist, und ein austauschbares Gassackmodul, das in die Aufnahme des Grundkörpers zumindest teilweise eingesetzt ist, wobei das Gassackmodul einen Gassack und einen Gasgenerator zum Aufblasen des Gassacks im Rückhaltefall hat und wobei das Gassackmodul selbst ein Modulpolster hat, das zumindest teilweise das Kopfstützpolster der Kopfstütze an der Vorderseite der Kopfstütze bildet.

Die vorliegende Erfindung hat den entscheidenden Vorteil, daß die Montage der erfindungsgemäßen Kopfstütze sehr einfach ist. Es muß nämlich nur das Gassackmodul in die dafür vorgesehene Aufnahme des Grundkörpers der Kopfstütze eingesetzt werden, um die komplette Kopfstütze zu bilden. Damit sind bei der Endmontage der erfindungsgemäßen Kopfstütze lediglich zwei Komponenten zu berücksichtigen, wodurch die Montage erheblich vereinfacht ist und eine unsachgemäße Montage wie bei herkömmlichen Kopfstützen mit vielfältigen Komponenten vermieden wird.

Hat der Rückhaltefall stattgefunden und wurde der Gassack der Kopfstütze ausgelöst, braucht lediglich das verbrauchte Gassackmodul aus der Aufnahme des Kopfstützen-Grundkörpers herausgenommen werden und ein neues, funktionsbereites und unverbrauchtes Gassackmodul wieder in die Aufnahme eingesetzt werden, um die crash-aktive Funktion der Kopfstütze wieder herzustellen. Die erfindungsgemäße Kopfstütze ermöglicht somit eine leichte Austauschbarkeit des Gassackmoduls, ohne daß die gesamte Kopfstütze, insbesondere der Grundkörper der Kopfstütze, zerlegt werden muß. Des weiteren ist die erfindungsgemäße Kopfstütze in der Regel nach dem Rückhaltefall bis auf das Gassackmodul selbst wieder verwendbar, da in der Regel nur das Gassackmodul ersetzt werden muß, der Grundkörper aber im Rückhaltefall normalerweise erhalten bleibt.

Der Grundkörper der Kopfstütze hat vorzugsweise ein Grundkörperpolster, das einen Teil des Kopfstützpolsters der Kopfstütze bildet und das das Modulpolster des eingesetzten Gassackmoduls rahmenförmig z.B. an der Vorderseite der Kopfstütze umschließt, wenn das Gassackmodul in die Aufnahme des Grundkörpers eingesetzt ist. Hierdurch wird eine besonders stabile Fixierung des Gassackmoduls in der Aufnahme des Grundkörpers ermöglicht.

Vorzugsweise sind das Gassackmodul und der Grundkörper mittels einer Rastverbindung aneinander befestigbar, so daß das Gassackmodul beim Einsetzen in den Grundkörper einschnappt, wodurch eine weitere Erleichterung bei der Montage der erfindungsgemäßen Kopfstütze gegeben ist, da keine Werkzeuge oder Einzelteile für die Befestigung und Unterbringung des Gassackmoduls am Grundkörper der Kopfstütze erforderlich sind.

Vorzugsweise bildet das Modulpolster des Gassackmoduls das gesamte Kopfstützenpolster der Vorderseite der Kopfstütze, wodurch die Herstellung der gesamten Kopfstütze vereinfacht wird, da eine Polsterung schneller und einfacher Herzustellen ist, als mehrere einzelne Polsterelemente, die aneinandergefügt werden müssen.

Vorzugsweise sind die Aufnahme des Grundkörpers und das Gassackmodul derart formmäßig aneinander angepaßt, daß das in die Aufnahme eingesetzte Gassackmodul formschlüssig in der Aufnahme gehalten ist. D.h., daß das Gassackmodul alleine durch die Formgebung der sich berührenden Oberflächen von Gassackmodul und Aufnahme in der Aufnahme oder am Grundkörper gehalten ist. Z. B. kann das Gassackmodul eine konvexe und/oder konkave Oberfläche aufweisen, die in eine entsprechend konkave bzw. konvexe Oberflächen der Aufnahmewandung einpaßt oder einschnappt, wodurch eine einfache Montage und auch Austauschbarkeit ohne zusätzliche Befestigungselemente ermöglicht wird.

Vorzugsweise ist der Grundkörper der Kopfstütze als Rahmen ausgebildet, der eine von seiner Vorderseite zu seiner Rückseite durchgehende Aufnahme für das Gassackmodul hat. Diese Ausführungsform der erfindungsgemäßen Kopfstütze ermöglicht das Nachrüsten eines Gassackmoduls bzw. das Ergänzen einer bereits vorhandenen, sogenannten Rahmenkopfstütze mit einem Gassackmodul, um eine crash-aktive Kopfstütze zu bilden.

Das Gassackmodul hat vorzugsweise ein Modulpolster, das zumindest einen Teil des Kopfstützpolsters an der Rückseite der Kopfstütze bildet. Dies spielt insbesondere im Zusammenhang mit einer vorhandenen Rahmenkopfstütze eine Rolle, um diese auch an der Rückseite mit einem Polster zu versehen, wodurch ein verbesserter Aufprallschutz für einen rückwärtig im Fahrzeug sitzenden Insassen bereitgestellt wird.

Weitere vorteilhafte Weiterbildungen der erfindungsgemäßen Kopfstütze sind den Unteransprüchen zu entnehmen.

Das erfindungsgemäße Gassackmodul (vgl. Anspruch 7) zum Einbau in eine Aufnahme einer Kopfstütze zur Anbringung an der Rückenlehne eines Fahrzeugsitzes, wobei die Kopfstütze ein Kopfstützpolster mit einer Kopfstützfläche oder Aufprallfläche für den Insassenkopf an einer Vorderseite und/oder Rückseite der Kopfstütze hat, ist austauschbar und umfaßt einen Gassack, einen Gasgenerator zum Aufblasen des Gassacks im Rückhaltefall und ein Modulpolster, das zumindest teilweise das Kopfstützpolster der Kopfstütze bildet.

Wie zuvor mit Bezug auf die erfindungsgemäße Kopfstütze erläutert wurde, ermöglicht das erfindungsgemäße Gassackmodul eine einfache Montage der Kopfstütze und auch eine entsprechend einfache Austauschbarkeit oder Wiederinstandsetzung der Kopfstütze nach einem Rückhaltefall. Vorteilhafte Weiterbildungen des erfindungsgemäßen Gassackmoduls sind den Unteransprüchen zu entnehmen.

Der Grundkörper für eine Kopfstütze zur Anbringung an der Rückenlehne eines Fahrzeugsitzes hat eine außenseitig zugängliche Aufnahme für ein Gassackmodul, in die das Gassackmodul eingesetzt werden kann, um eine crash-aktive Kopfstütze mit einfacher Montage zu bilden.

Weitere Vorteile, vorteilhafte Weiterbildungen und Anwendungsmöglichkeiten der vorliegenen Erfindung sind aus der nachfolgenden Beschreibung von Ausführungsformen der Erfindung in Verbindung mit den beiliegenden Zeichnungen ersichtlich. Es zeigen:
Figur 1 eine perspektivische Ansicht einer ersten Ausführungsform der erfindungsgemäßen Kopfstütze mit einem zugehörigen erfindungsgemäßen Gassackmodul und einem Grundkörper;
Figur 2 eine Schnittansicht des erfindungsgemäßen Gassackmoduls der Figur 1;
Figur 3 eine Schnittansicht des Grundkörpers der Kopfstütze der Figur 1;
Figur 4 eine Schnittansicht durch die zusammengebaute Ausführungsform der Figuren 1 bis 3;
Figur 5 eine perspektivische Ansicht einer zweiten Ausführungsform der erfindungsgemäßen Kopfstütze mit einem zugehörigen erfindungsgemäßen Gassackmodul und einem zugehörigen Kopfstützen-Grundkörper;
Figur 6 eine seitliche Ansicht des Gassackmoduls und des Grundkörpers der Kopfstütze im Schnitt gemäß der Ausführungsform der Erfindung der Figur 5; und
Figur 7 eine Ansicht der zweiten Ausführungsform der Erfindung der Figuren 5 und 6 im montierten Zustand.

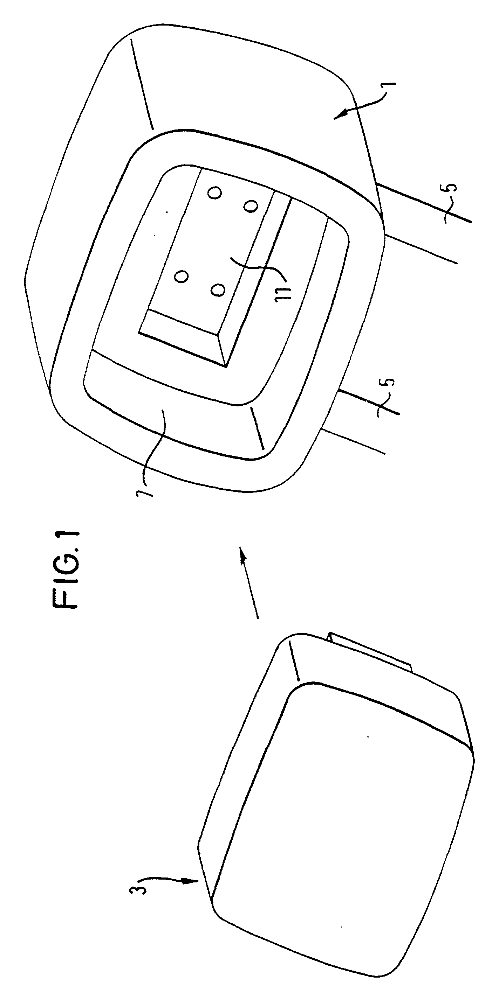

In den Figuren 1 bis 4 ist eine erste Ausführungsform der erfindungsgemäßen Kopfstütze gezeigt, die ein Gassackmodul 3 und einen Grundkörper 1 umfaßt.

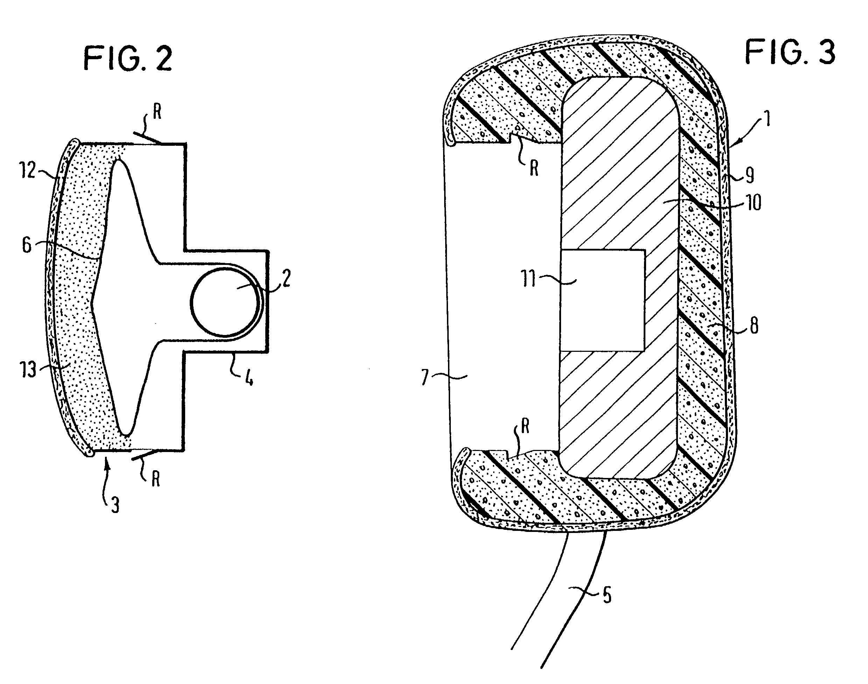

Das erfindungsgemäße Gassackmodul 3 der Figur 2 umfaßt einen Gasgenerator 2, der in einem Gehäuse 4 angeordnet ist, das rückseitig am Gassackmodul 3 vorgesehen ist. Das Gassackmodul 3 umfaßt weiterhin ein Modulpolster 13, z.B. aus Schaumstoff bestehend, das vorderseitig mit einer Oberware 12 bzw. einem Bezug oder einem Styling versehen ist und in dem ein zusammengelegter Gassack 6 integriert ist, der mit dem Gasgenerator 2 verbunden ist, von diesem im Rückhaltefall aufgeblasen wird und durch das Modulpolster 13 hindurch aus der Kopfstütze austritt, um den Abstand zum Kopf des Insassen zu verringern.

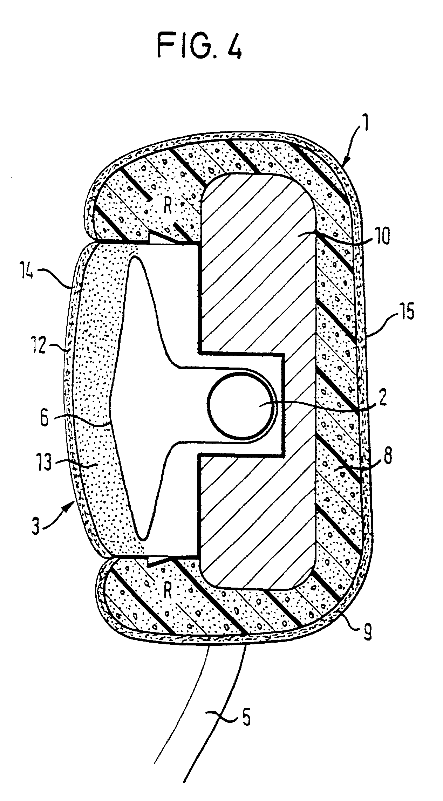

Der Grundkörper 1 der erfindungsgemäßen Kopfstütze gemäß der ersten Ausführungsform umfaßt einen inneren, stabilen Korpus 10 aus Kunststoff oder Metall, an dem eine Halterung 5 befestigt ist, die aus einem Bügel mit Stangen besteht und die die Kopfstütze an der Rückenlehne des betreffenden Fahrzeugsitzes haltert. Der Korpus 10 trägt ein Grundkörperpolster 8 aus Schaumstoff, das den Korpus 10 und auch eine an der Vorderseite 14 des Grundkörpers 1 von außen zugängliche Aufnahme 7 rahmenförmig umschließt. Das Grundkörperpolster 8 erstreckt sich, wie der Figur 4 zu entnehmen ist. damit von der Rückseite 15 auf die Vorderseite 14 der erfindungsgemäßen Kopfstütze und ist außenseitig wiederum mit einer Oberware 9, einem Bezug oder einem Styling versehen. Der Korpus 10 hat eine Aussparung 11, die zu der Aufnahme 7 hin offen ist. Das Gehäuse 4 des Gassackmoduls 3 paßt in die Aussparung 11 des Grundkörpers 1 der erfindungsgemäßen Kopfstütze ein. Weiterhin paßt das Modulpolster 13 in die Aufnahme 7 des Grundkörpers 1 der Kopfstütze ein. Das Gassackmodul 3 füllt die Aufnahme 7 vollständig aus und schließt die Aufnahme 7 zur Vorderseite 14 der Kopfstütze hin ab, zu der sich der Gassack im Auslösefall hin entfaltet. Das Modulpolster 13 bildet dabei vorderseitig einen Teil der Kopfstützenpolsterung, wobei die Stirnflächen des Grundkörperpolsters 8 an der Vorderseite und das Modulpolster 13 zusammen das Kopfstützenpolster an der Vorderseite 14 der Kopfstütze bilden.

An dem Grundkörper 1 der Kopfstütze und an dem Gassackmodul 3 sind Rastverbindungen R (Haken und Ausnehmungen) vorgesehen, die ein Einschnappen des Gassackmoduls 3 beim Einsetzen des Gassackmoduls 3 in die Aufnahme 7 des Grundkörpers 1 zur Befestigung des Gassackmoduls 3 an bzw. in dem Grundkörper 1 der Kopfstütze sicherstellen. Die Rastverbindungen sind lösbar ausgebildet, um ein Auswechseln des Gassackmoduls 3, z.B. nach einem Rückhaltefall, zu ermöglichen.

Der Gasgenerator 2 hat einen Steckverbinder (nicht gezeigt), der in einen zugehörigen Steckverbinder des Korpus 10 des Grundkörpers 1 einsteckbar ist, um zwischen dem Gasgenerator 2 und z.B. einer zentralen Airbag-Steuereinrichtung, die über eine elektrische Leitung mit dem Steckverbinder an dem Korpus 10 verbunden ist, eine durchgehende elektrische Signalverbindung für die Auslösung des Gasgenerators 2 im Rückhaltefall zu erhalten.

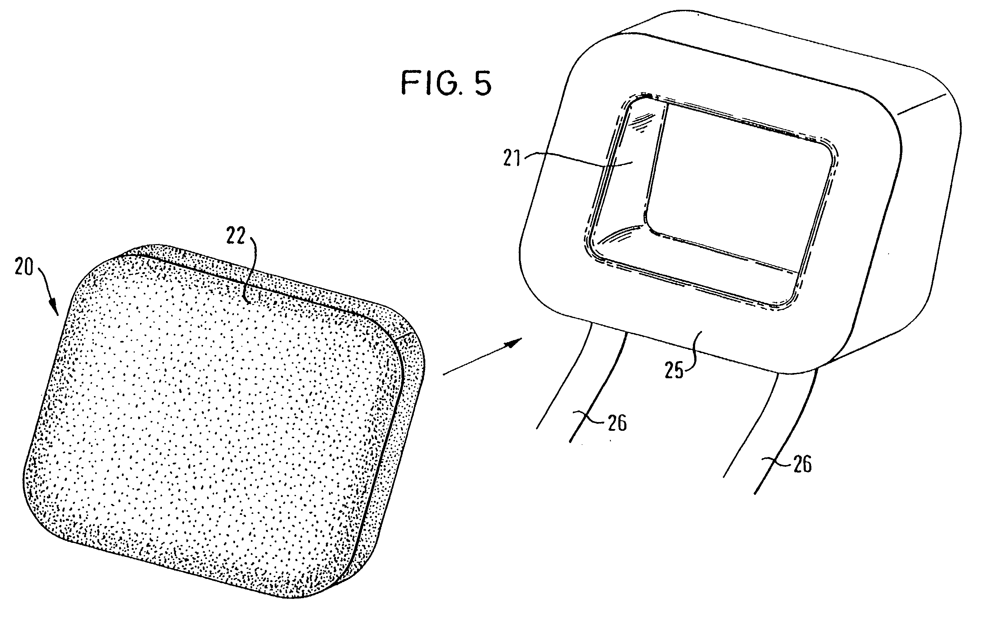

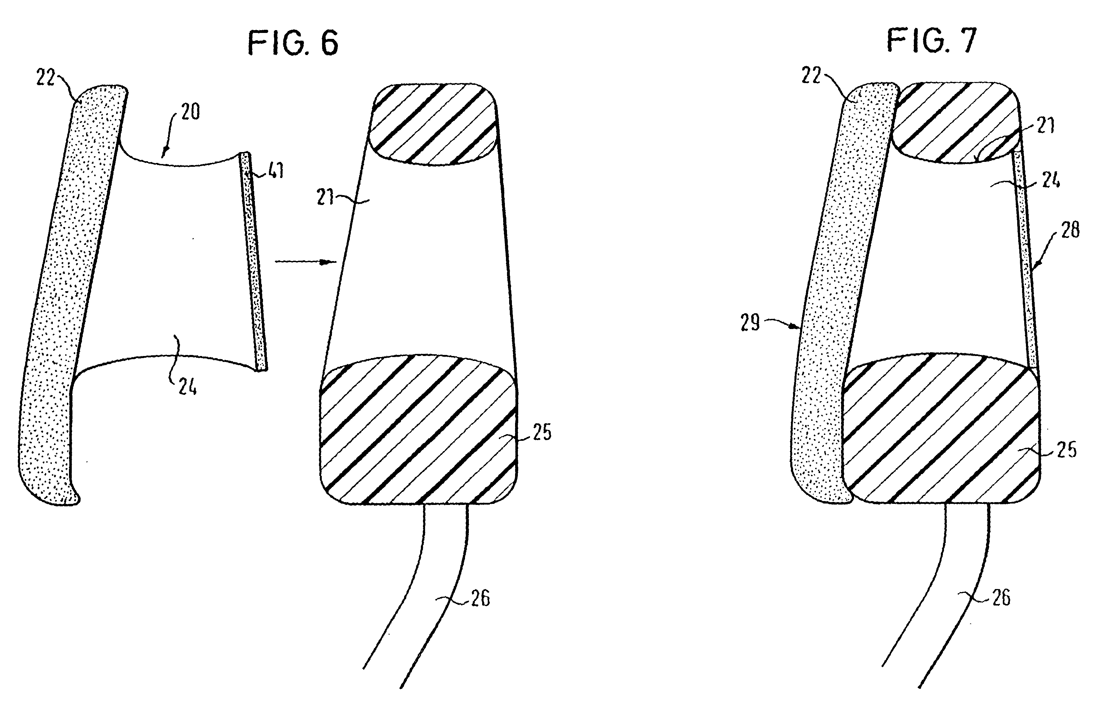

In den Figuren 5 bis 7 ist eine zweite Ausführungsform der erfindungsgemäßen Kopfstütze gezeigt, die ein zugehöriges Gassackmodul 20 und einen Grundkörper 25 in der Form einer vorhandenen Rahmenkopfstütze umfaßt.

Das Gassackmodul 20 hat ein großflächiges Modulpolster 22, an das sich rückseitig ein Gehäuse 24 anschließt, in dem der Gasgenerator mit Gassack geschützt untergebracht ist. Die Oberfläche des Gehäuses 24 verläuft vom Modulpolster 22 ausgehend sattelförmig konkav vertieft. Das Gehäuse 24 besteht aus einem elastischen Kunststoffmaterial, das eine gewisse elastische Verformung zuläßt.

Der Grundkörper 25 der Kopfstütze hat wiederum eine Halterung 26, ist rahmenförmig ausgebildet und hat eine durchgehende Öffnung oder Aufnahme 21, die an einer Vorderseite 29 und einer Rückseite 28 nach außen hin offen ist - natürlich nur, wenn das Gassackmodul 20 nicht in die Aufnahme 21 eingesetzt ist - und die von dem Grundkörper 25 rahmenförmig umschlossen ist. Die innenseitigen Oberflächen in der Aufnahme 21 sind konvex gewölbt und in der Form an das Gehäuse 24 des Gassackmoduls 20 angepaßt.

Wird das Gassackmodul 20 in die Aufnahme 21 des Grundkörpers 25 eingesetzt, wird das Gehäuse 24 außenseitig elastisch deformiert, so daß es in die Aufnahme 21 eingesetzt werden kann und schließlich in die Aufnahme 21 einschnappt. Das Gehäuse 24 ist in der eingeschnappten Position im Grundkörper 25 durch die gegenseitige konvexe bzw. konkave Anpassung der Oberfläche des Gehäuses 24 und der innenseitigen Oberflächen des Grundkörpers 25 in dem Grundkörper 25 der erfindungsgemäßen Kopfstütze festgehalten. Das Modulpolster 22 deckt flächenmäßig den gesamten Grundkörper 25 der Kopfstütze an der Vorderseite 29 der Kopfstütze ab und bildet somit das gesamte Kopfstützenpolster an der Vorderseite 29.

An der Rückseite 28 des Gehäuses 24 des Gassackmoduls 20 kann ein rückseitiges Polster 41 angebracht sein, das bei in die Aufnahme 21 eingeschobenem Gassackmodul 20 die Polsterung der Kopfstütze an der Rückseite 28 bildet oder ergänzt.

## Patentansprüche

1. Gassackmodul zum Einbau in eine Aufnahme (7; 21) einer Kopfstütze zur Anbringung an der Rückenlehne eines Fahrzeugsitzes, wobei das Gassackmodul (3; 20) einen expandierbaren Gassack und einen Gasgenerator (2) zum Aufblasen des Gassacks im Rückhaltefall aufweist, **dadurch gekennzeichnet, daß** das Gassackmodul zusammen mit Gasgenerator (2), Gassack und einen Modulpolster (13; 22) eine austauschbare Einheit ist, wobei das Modulpolster (13; 22) zumindest teilweise das Kopfstützpolster einer Kopfstütze bilden kann.

2. Gassackmodul nach Anspruch 1, **dadurch gekennzeichnet, daß** das Gassackmodul (3; 20) einen Teil einer Rastverbindung (R) zur Befestigung an einer Kopfstütze aufweist.

3. Gassackmodul nach Anspruch 1 oder 2, **dadurch gekennzeichnet, daß** das Gassackmodul ein Modulpolster hat, das zumindest einen Teil des Kopfstützpolsters an der Rückseite einer Kopfstütze bilden kann.

4. Kopfstütze zur Anbringung an der Rückenlehne eines Fahrzeugsitzes, wobei die Kopfstütze umfaßt:
ein Kopfstützpolster mit einer Aufprallfläche für den Kopf des Insassen an der Vorderseite (14; 29) und/oder der Rückseite (15; 28) der Kopfstütze,
einen Grundkörper (1; 25), der eine Halterung (5; 26) hat, mit der die Kopfstütze an der Rückenlehne befestigt ist,
**dadurch gekennzeichnet, daß** der Grundkörper (1; 25) einen inneren Korpus (10) hat, an dem die Halterung (5) befestigt ist und die Kopfstütze ein Gassackmodul (3; 20) nach einem der Ansprüche 1 bis 3 aufweist,
wobei der Grundkörper (1; 25) eine wenigstens nach Vorne offene Aufnahme (7; 21) für das Gassackmodul (3; 20) hat,
wobei das Modulpolster (13; 22) des Gassackmoduls (3; 20) zumindest teilweise das Kopfstützpolster der Kopfstütze bildet sowie zusammen mit dem Gassack und dem Gasgenerator (2) eine Einheit bildet, wobei das Gassackmodul (3; 20) in die Aufnahme (7; 21) von außen so eingesetzt wird, daß es zumindest teilweise in die Aufnahme (7; 21) ragt, und austauschbar ist.

5. Kopfstütze nach Anspruch 4, **dadurch gekennzeichnet, daß** der Grundkörper (1) ein Grundkörperpolster (8) hat, welches einen Teil des Kopfstützpolsters der Kopfstütze bildet und welches das Modulpolster (13) des eingesetzten Gassackmoduls (3) rahmenförmig umschließt, wenn das Gassackmodul (3) in die Aufnahme (7) des Grundkörpers (1) eingesetzt ist.

6. Kopfstütze nach Anspruch 4 oder 5, **dadurch gekennzeichnet, daß** das Gassackmodul (3; 20) mittels einer Rastverbindung am Grundkörper (1; 25) befestigt ist.

7. Kopfstütze nach einem der Ansprüche 4 bis 6, **dadurch gekennzeichnet, daß** das Modulpolster (22) des eingesetzten Gassackmoduls (20) das gesamte Kopfstützpolster an der Vorderseite (29) der Kopfstütze bildet.

8. Kopfstütze nach einem der Ansprüche 4 bis 7, **dadurch gekennzeichnet, daß** die Aufnahme (21) des Grundkörpers (25) und das Gassackmodul (20) derart formmäßig aneinander angepaßt sind, daß das in die Aufnahme (21) eingesetzte Gassackmodul (20) formschlüssig in der Aufnahme (21) gehalten ist.

9. Kopfstütze nach einem der Ansprüche 4 bis 8, **dadurch gekennzeichnet, daß** der Grundkörper (25) der Kopfstütze als Rahmen ausgebildet ist, der eine von seiner Vorderseite (29) zu seiner Rückseite (28) durchgehende Aufnahme (21) für das Gassackmodul (20) hat.

## Claims

1. A gas bag module for incorporation into a receiving means (7; 21) of a headrest for arrangement on the backrest of a vehicle seat, the gas bag module (3; 20) including an expandable gas bag and a gas generator (2) to inflate the gas bag in the case of restraint, **characterized in that** the gas bag module together with the gas generator (2), the gas bag and a module pad (13; 22) is an exchangeable unit, the module pad (13; 22) being adapted to at least partially form the headrest pad of a headrest.

2. The gas bag module according to claim 1, **characterized in that** the gas bag module (3; 20) includes a part of a latching connection (R) for attachment to a headrest.

3. The gas bag module according to claim 1 or 2, **characterized in that** the gas bag module has a module pad which is adapted to form at least a part of the headrest pad on the rear face of a headrest.

4. A headrest for arrangement on the backrest of a vehicle seat, the headrest comprising:
a headrest pad with an impact surface for the head of the occupant on the front face (14; 29) and/or on the rear face (15; 28) of the headrest,
a base body (1; 25) having a support (5; 26) by which the headrest is secured to the backrest,
**characterized in that** the base body (1; 25) has an inner body (10) to which the support (5) is secured, and the headrest includes a gas bag module (3; 20) according to any of claims 1 to 3,
the base body (1; 25) having a receiving means (7; 21) which is open at least to the front for the gas bag module (3; 20),
the module pad (13; 22) of the gas bag module (3; 20) at least partially forming the headrest pad of the headrest and forming a unit together with the gas bag and the gas generator (2), the gas bag module (3; 20) being inserted into the receiving means (7; 21) from the outside such that it at least partially protrudes into the receiving means (7; 21) and is exchangeable.

5. The headrest according to claim 4, **characterized in that** the base body (1) has a base body pad (8) which forms a part of the headrest pad of the headrest and which encloses the module pad (13) of the inserted gas bag module (3) like a frame when the gas bag module (3) is inserted in the receiving means (7) of the base body (1).

6. The headrest according to claim 4 or 5, **characterized in that** the gas bag module (3; 20) is secured to the base body (1; 25) by means of a latching connection.

7. The headrest according to any of claims 4 to 6, **characterized in that** the module pad (22) of the inserted gas bag module (20) forms the entire headrest pad on the front face (29) of the headrest.

8. The headrest according to any of claims 4 to 7, **characterized in that** the receiving means (21) of the base body (25) and the gas bag module (20) are adapted to each other in terms of shape such that the gas bag module (20) inserted in the receiving means (21) is held with an interlocking fit in the receiving means (21).

9. The headrest according to any of claims 4 to 8, **characterized in that** the base body (25) of the headrest is constructed as a frame which has a receiving means (21) extending from its front face (29) to its rear face (28) for the gas bag module (20).

## Revendications

1. Module de coussin à gaz destiné à être monté dans un logement (7 ; 21) d'un appuie-tête à mettre en place sur le dossier d'un siège de véhicule, le module de coussin à gaz (3 ; 20) présentant un coussin à gaz expansible et un générateur de gaz (2) pour gonfler le coussin à gaz en cas de retenue, **caractérisé en ce que** le module de coussin à gaz, conjointement avec le générateur de gaz (2), le coussin à gaz et un rembourrage de module (13 ; 22), est une unité interchangeable, le rembourrage de module (13 ; 22) pouvant former au moins partiellement le rembourrage d'un appuie-tête.

2. Module de coussin à gaz selon la revendication 1, **caractérisé en ce que** le module de coussin à gaz (3 ; 20) présente une partie d'une liaison par enclenchement (R) pour être fixé à un appuie-tête.

3. Module de coussin à gaz selon la revendication 1 ou 2, **caractérisé en ce que** le module de coussin à gaz a un rembourrage de module qui peut former au moins une partie du rembourrage d'appuie-tête sur la face postérieure d'un appuie-tête.

4. Appuie-tête destinée à être montée sur le dossier d'un siége de véhicule, l'appuie-tête comportant :
un rembourrage d'appuie-tête avec une surface d'impact pour la tête de l'occupant sur la face antérieure (14 ; 29) et/ou sur la face postérieure (15 ; 28) de l'appuie-tête,
un corps de base (1 ; 25) qui a un support (5 ; 26) par lequel l'appuie-tête est fixé sur le dossier,
**caractérisé en ce que** le corps de base (1 ; 25) a un corps intérieur sur lequel est fixé le support 5, et l'appuie-tête présente un module de coussin à gaz (3 ; 20) selon l'une des revendications 1 à 3,
le corps de base (1 ; 25) ayant un logement (7 ; 21) ouvert au moins vers l'avant pour le module de coussin à gaz (3 ; 20),
le rembourrage de module (13 ; 22) du module de coussin à gaz (3 ; 20) formant au moins partiellement le rembourrage de l'appuie-tête et formant une unité conjointement avec le coussin à gaz et le générateur de gaz (2), le module de coussin à gaz (3 ; 20) étant inséré depuis l'extérieur dans le logement (7 ; 21) de telle sorte qu'il fait saillie au moins partiellement dans le logement (7 ; 21) et qu'il est interchangeable.

5. Appuie-tête selon la revendication 4, **caractérisé en ce que** le corps de base (1) a un rembourrage de corps de base (8) qui forme une partie du rembourrage d'appuie-tête et qui entoure en forme de cadre le rembourrage de module (13) du module de coussin à gaz (3) lorsque le module de coussin à gaz (3) est inséré dans le logement (7) du corps de base (1).

6. Appuie-tête selon la revendication 4 ou 5, **caractérisé en ce que** le module de coussin à gaz (3 ; 20) est fixé au moyen d'une liaison par enclenchement sur le corps de base (1 ; 25).

7. Appuie-tête selon l'une des revendications 4 à 6, **caractérisé en ce que** le rembourrage de module (22) du module de coussin à gaz (20) inséré forme le rembourrage entier d'appuie-tête sur la face antérieure (29) de l'appuie-tête.

8. Appuie-tête selon l'une des revendications 4 à 7, **caractérisé en ce que** le logement (21) du corps de base (25) et le module de coussin à gaz (20) sont adaptés l'un à l'autre dans leur forme de telle sorte que le module de coussin à gaz (20) inséré dans le logement (21) est retenu par coopération de formes dans le logement (21).

9. Appuie-tête selon l'une des revendications 4 à 8, **caractérisé en ce que** le corps de base (25) de l'appuie-tête est réalisé sous forme de cadre qui a depuis sa face antérieure (20) jusqu'à sa face postérieure (28) un logement (21) pour le module de coussin à gaz (20).
